# EUROPEAN PATENT APPLICATION

(11) **EP 4 667 095 A1**
(43) Date of publication of application: **24.12.2025**
(21) Application number: 24182548.8
(22) Date of filing: 17.06.2024
(51) Int. Cl.: B01J 8/18

(54) **FLUIDIZED BED APPARATUS AND METHOD FOR OPERATING A FLUIDIZED BED APPARATUS**

(71) Applicant: Doosan Lentjes GmbH, 40880 Ratingen (DE)
(72) Inventor: Narin, Oguzhan, 40880 Ratingen (DE); Brosch, Björn, 40880 Ratingen (DE); Schmitt, Sebastian, 40880 Ratingen (DE)
(74) Representative: Feucker, Max Martin

(57) **Abstract**

The invention relates to a fluidized bed apparatus, comprising a fluidized bed reactor (1), the fluidized bed reactor (1) having a reaction chamber (2), a fluidizing bottom (3) at the bottom of the reaction chamber (2), at least one reactant supply (4) above the fluidizing bottom (3), at least one source (5) for a reactant being connected to the reactant supply (4), a first fluidizing gas source (6) being connected to the fluidizing bottom (3), a second fluidizing gas source (7) being connected to the fluidizing bottom (3), wherein the fluidized bed apparatus comprises a pump system (8) connected to the fluidizing bottom (3) for withdrawing fluidizing gas from the fluidizing bottom (3).

## Description

The present invention generally relates to a fluidized bed reactor and in particular to a fluidized apparatus comprising a fluidized bed reactor as well as to a method for operating such a fluidized bed apparatus. Hereinafter terms like "upper", "lower", "horizontal", "vertical", "inner" etc. always refer to a regular used position of the fluidized bed reactor.

A fluidized bed apparatus typically comprises a fluidized bed reactor, which walls can be made of tubes, through which water runs, wherein said tubes are either welded directly to each other to provide a wall structure or with fins/ribs between parallel running tube sections. The wall of the fluidized bed reactor may also be made of bricks or bricks in combination with tubes.

The fluidized bed reactor comprises a reaction chamber for particulate and/or liquid matter as reactant, wherein the reaction chamber may have at least one particulate/liquid matter inlet for the particulate/liquid matter and at least one primary particulate matter outlet for the particulate matter. The fluidized bed reactor may further comprise a fluidizing grate as part of a fluidizing bottom at the bottom of the reaction chamber, wherein the fluidizing grate has multiple openings for an operating fluid to fluidize particulate matter above the fluidizing grate within the reaction chamber. The multiple openings may be embodied by multiple nozzles, wherein each nozzle may in turn have multiple openings.

Typically, the reaction chamber of such a fluidized bed reactor has at least one operating fluid outlet at its upper end, wherein said operating fluid outlet allows a mixture of gases and solid particles exhausted from the reaction chamber to flow into at least one separator.

The separator serves to disengage the gases and particulate matter. Thereafter the separated reaction gases and the particulate matter are treated separately. The particulate matter may be directly returned into the reaction chamber.

The general design of a circulating fluidized bed apparatus and its components is disclosed in EP 0 495 296 A2.

The general process engineering of this type of a fluidized bed apparatus is more or less defined and includes:
- providing the reactant as particulate matter or liquid via an inlet opening arranged above the fluidizing bottom into the reaction chamber,
- fluidizing the particulate matter by a (operating) gas, introduced under pressure via a fluidizing bottom, which may comprise respective nozzles and/or a grate in the grate area of the reaction chamber,
- eventually transferring the energy (heat) produced in the fluidized bed via heat transfer elements (in particular tubes through which a heat transfer fluid like water or steam flows), arranged in or adjacent to the reaction chamber or transferring the energy from the reaction gases having left the reaction chamber.

Depending on the velocity of the provided operating fluid the fluidized bed can be embodied as stationary, bubbling or circulating fluidized bed.

More specifically, the present invention relates to a method for combusting carbonaceous fuel in a fluidized bed reactor, wherein at least one carbonaceous fuel may be provided as reactant to the reaction chamber of the fluidized bed reactor.

Accordingly, a respective fluidized bed apparatus comprises a fluidized bed reactor, which has a reaction chamber, a fluidizing bottom at the bottom of the reaction chamber and at least one carbonaceous fuel supply above the fluidizing bottom. Furthermore, the fluidized bed apparatus comprises at least one source for a carbonaceous fuel being connected to the carbonaceous fuel supply and at least one fluidizing agent source being connected to the fluidizing bottom, wherein at least one fluidizing agent source is configured to supply a gas comprising gaseous oxygen.

In particular, the carbonaceous fuel may be a solid fuel, which is provided as the above described particulate matter to the reaction chamber. For example, the carbonaceous solid fuel may be coal or biomass. Additionally or alternatively, a liquid carbonaceous fuel may be provided to the reaction chamber. For example, oil may be provided as liquid carbonaceous fuel to the reaction chamber.

In order that a combustion reaction of the carbonaceous fuel can occur, a fluidizing agent (also referred to as operating gas) comprising gaseous oxygen is provided at the bottom of the fluidized bed chamber, so that the carbonaceous fuel and in particular the solid carbonaceous fuel is fluidized by the provided fluidizing agent. In order that the combustion reaction starts, an ignition device may be arranged within the reaction chamber.

The oxygen comprising gas is in particular air, which is supplied as primary air into the reaction chamber at the bottom of the reaction chamber through the fluidizing bottom. In this case, a first fluidizing agent source may be the surrounding atmosphere and/or a blower for providing the first fluidizing gas.

In a preferred embodiment, solid carbonaceous fuel is provided to the reaction chamber, whereas a second reactant may be added to the reaction chamber, for example liquid carbonaceous fuel may be added as auxiliary carbonaceous fuel. The combustion of carbonaceous fuel within a reaction chamber of a fluidized bed reactor is generally known, for example from EP 0 495 296 A2.

It is also known to add gaseous ammonia to the flue gases of the combustion reaction in order to reduce the nitrogen oxide emission. This method is known as selective non-catalytic reduction (SNCR). In order that a selective non-catalytic reduction occurs, ammonia (or urea) is injected at locations, where the temperature of the flue gases is between 760 °C and 1090 °C. If ammonia would be injected to the flue gases at higher temperatures, additional nitrogen oxide would be produced.

EP 0 280 016 A2 discloses a device for introducing a gaseous medium into a reaction chamber of a fluidized bed reactor. The disclosed device for introducing a gaseous medium can be arranged at multiple locations within the reaction chamber. It is disclosed, that the device is arranged at the bottom of the reaction chamber or above the bottom of the reaction chamber, so that the outlets of the device would be arranged within or above the fluidized bed during operation. Accordingly, the device disclosed in EP 0 280 016 can be used as fluidizing bottom or as a device for introducing gaseous medium within or above the fluidized bed. EP 0 280 016 A2 also discloses that ammonia can be supplied with the device. But it is not disclosed, at which location ammonia is supplied by the device. In light of the general technical knowledge it has to be assumed that the device is used to add ammonia to the flue gases, so that a selective non-catalytic reaction occurs.

In EP 4 303 488 A1 it is suggested to provide gaseous ammonia as further fluidizing gas through the fluidizing bottom to the reaction chamber, so that the ammonia is combusted in addition to the reactant to provide thermal energy to the reaction chamber. The thermal energy of the combustion of the carbonaceous fuel and the thermal energy of the combustion of ammonia can be withdrawn by the heat transfer elements of the fluidized bed reactor. The combustion of ammonia does not produce additional CO₂. The thermal energy can be produced directly in the reaction chamber by combusting ammonia within the reaction chamber. In any case, the fluidized bed apparatus comprises at least one ammonia source as additional fluidizing agent source, which is connected to the fluidizing bottom. If in this specific configuration the provision of the first fluidizing gas (in particular the oxygen comprising gas and preferably ambient air) fails, the fluidized bed within the reaction chamber collapses so that the ammonia and also the remaining first fluidizing gas would remain within a wind box of the fluidizing bottom. The presence of ammonia within the wind box without the supply of ambient air may lead to an undesired reaction of the ammonia or to leakage of the ammonia into the surrounding.

Against this background, it is an object of the present invention to provide a fluidized bed apparatus and a method for operating the fluidized bed reactor, with which the risk of a malfunction of the fluidized bed apparatus is avoided.

One possible solution for this object is provided with a fluidized bed apparatus and a method for operating the fluidized bed apparatus according to the features of the respective independent claim. Further solutions and preferred embodiments of the fluidized bed apparatus and the method are described in the dependent claim and in the above and below description, wherein single features of the preferred embodiments can be combined with each other in a technically meaningful manner. Features disclosed with regard to the method can be applied to the fluidized bed apparatus and vice versa.

The object is in particular solved by a method for operating a fluidized bed reactor, comprising the following steps:
- Providing at least one reactant (preferably a carbonaceous solid or liquid fuel) to a reaction chamber of the fluidized bed reactor,
- Providing a first fluidizing gas (preferably an oxygen comprising gas such as ambient air) and a second fluidizing gas (preferably gaseous ammonia) as fluidizing agent through a fluidizing bottom at a bottom of the reaction chamber, thereby fluidizing the reactant, wherein a reaction (preferably a combustion reaction) of the fluidizing agent with the reactant occurs, wherein at least part of the fluidizing agent is withdrawn from the fluidizing bottom when a failure of providing the first fluidizing agent is detected.

The object may also be solved by a fluidized bed apparatus comprising a fluidized bed reactor, with a reaction chamber, a fluidizing bottom at the bottom of the reaction chamber and at least one reactant supply above the fluidizing bottom, at least one source for a reactant (preferably a source for solid or liquid carbonaceous fuel) being connected to the reactant supply, a first fluidizing gas source (preferably a blower for providing ambient air) being connected to the fluidizing bottom and a second fluidizing gas source (preferably an ammonia gas source) being connected to the fluidizing bottom, wherein the fluidized bed apparatus comprises a pump system connected to the fluidizing bottom for withdrawing fluidizing gas from the fluidizing bottom.

With other words: The present invention suggests that the fluidized bed apparatus comprises an active or passive pump system, which allows that the fluidizing agent remaining within a windbox of the fluidizing bottom after failure of the first fluidizing gas source is withdrawn from the fluidizing bottom. This way it is ensured that no undesired reaction occurs within the fluidizing bottom or leakage of the fluidizing gas occurs when the provision of the first (main) fluidizing gas fails.

The present invention in particular refers to a method and a fluidized bed apparatus, in which ammonia is provided as the second fluidizing gas and wherein the ammonia is combusted within the reaction chamber. In this case, ammonia makes 2 % by volume to 30 % by volume of the whole volume of the fluidizing gases provided to the fluidizing bottom. Preferably, 5 % by volume to 25 % by volume and most preferably 10 % by volume to 20 % by volume of the provided fluidizing gases is ammonia.

Additionally, usually when ammonia is combusted, the mass ratio of ammonia to carbonaceous fuel is between 0.05 and 0.5. Preferably, the mass ratio of ammonia to carbonaceous fuel is between 0.1 and 0.25 and most preferably between 0.15 and 0.2. Accordingly, 5 % to 50 % by mass of the carbonaceous fuel may be replaced by ammonia to receive a similar heat output. Even if the carbonaceous fuel is not replaced by ammonia but ammonia is added to the combustion process at a constant mass supply of the carbonaceous fuel, the mass of the supplied ammonia may be between 5 % to 50 % of the mass of the supplied carbonaceous fuel.

In a simple embodiment, the pump system may comprise an active element, with which the remaining fluidizing gases are sucked away from the fluidizing bottom. Such an active pump element may be a fan or blower, which inlet side is connected directly or indirectly to the fluidizing bottom and in particular to a windbox of the fludizing bottom. The outlet side of such an active pump element may be connected to the surrounding. But, it is preferred that the outlet of the active pump element is connected to the reaction chamber above the fluidizing bottom, so that the withdrawn remaining fluidizing agent is provided to the reaction chamber, even if no further reaction occurs within the reaction chamber after the provision of the first fluidizing gas has failed.

In a preferred embodiment, the pump system is a passive pump system, in which the remaining fluidizing gas is not actively conveyed by a moving element, although there might be moveable elements in order to activate such a passive pump system.

For example, the fluidized bed apparatus may comprise at least one secondary gas injection system above the fluidizing bottom, with which for example secondary air might be provided to a combustion reaction within the reaction chamber. The secondary gas injection system, which might be embodied by one of multiple nozzles within the wall of the reaction chamber, may be connected to a secondary gas source. For example, the secondary gas source may be embodied by a blower for providing ambient air as secondary gas to the reaction chamber. Nevertheless, the secondary gas source may also comprise a storage tank for other secondary gases, which can be supplied to the combustion chamber.

The pump system may be connected to the secondary gas injection system so that the withdrawn fluidizing gas is provided to the reaction chamber through the injection system.

The pump system may comprise an ejector as passive pump element, wherein the ejector may be arranged in a supply line between the secondary gas source and the secondary gas injection system, wherein the ejector is also connected to a supply line between one, or both or all fluidizing gas sources and the fluidizing bottom. An ejector or vacuum ejector is a type of a vacuum pump, which produces a vacuum by means of the Venturi effect. In particular, the secondary gas would flow through a jet nozzle of the ejector into a tube that first narrows and then expands in cross-sectional area. In a mixing section, where the secondary gas has a high velocity, the remaining fluidizing gases are drawn in by the vacuum. The outlet of the ejector is in turn connected to the combustion chamber, so that the mixture of the secondary gas and the remaining fluidizing gas is provided to the reaction chamber.

In order to activate such a passive pump element as the ejector, a shut off valve may be arranged between a line leading from the fluidizing bottom to the respective inlet of the ejector for the to be withdrawn fluidizing gas. The respective shut off valve may be opened, when a failure of the provision of the first fluidizing agent is detected. For example, if it is detected that a blower for ambient air as first fluidizing gas fails, the respective shut off valve may be opened.

Alternatively or additionally, a shut off valve may be arranged in the supply line between the fluidizing gas source and the fluidizing bottom, wherein the ejector is connected to the supply line or to the fluidizing bottom downstream of the further shut off valve.

The fluidized bed apparatus may comprise a control unit, which is connected to at least the pump system, wherein the control unit is embodied to activate the pump system, when failure of the first fluidizing gas source is detected. Accordingly, the control unit may also be connected to the first fluidizing gas source.

The control unit may also be connected to multiple detectors arranged within the combustion chamber or in the supply lines to the fluidizing bottom.

In particular, the control unit is embodied to carry out the inventive method.

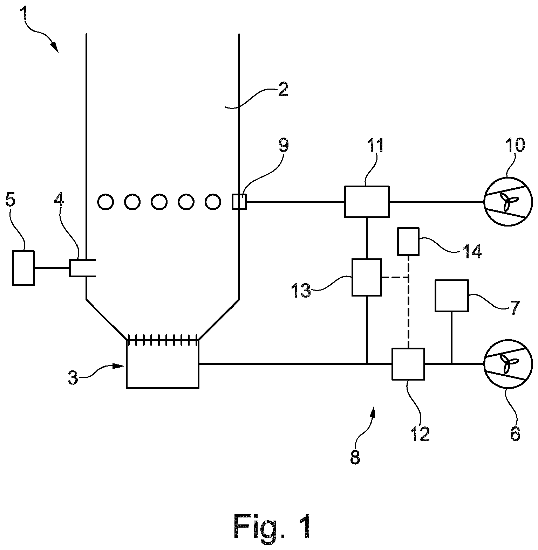

The invention and the technical background will now be described exemplary with regard to the figure.

The figure schematically shows a fluidized bed reactor 1 with a reaction chamber 2, wherein a fluidizing bottom 3 is arranged at the bottom of the reaction chamber 2.

The depicted fluidized bed apparatus further comprises a reactant source 5, which is connected to a reactant supply 4, through which a reactant, such as carbonaceous fuel, can be supplied from the reactant source 5 to the reaction chamber 2.

The fluidized bed apparatus further comprises a first fluidizing gas source 6, which is embodied as blower for providing ambient air to the fluidizing bottom 3. Furthermore, the fluidized bed apparatus comprises a second fluidizing gas source 7, which is embodied as an ammonia tank, so that ammonia can be provided as second fluidizing gas to the fluidizing bottom 3.

The fluidized bed apparatus also comprises a secondary gas source 10, which is embodied as blower for providing ambient air as secondary gas through a secondary gas injection system 9 into the reaction chamber 2.

During operation, solid or liquid carbonaceous fuel is provided from the reactant source 5 through the reactant supply 4 into the reaction chamber 2. Ambient air as oxygen comprising gas and ammonia are supplied from the first and second fluidizing gas sources 6 and 7 into the fluidizing bottom, wherein the volume flow or/and pressure of the provided fluidizing gases are sufficient to fluidize the reactant within the reaction chamber 2.

The carbonaceous fuel and the ammonia are combusted within the resulting fluidized bed. Additionally, a secondary gas can be supplied to the secondary gas injection to the combustion occurring within the reaction chamber 2.

The invention further suggests that the fluidized bed apparatus comprises a pump system 8. The pump system 8 comprises an ejector 11 arranged within the supply line between the secondary gas source 10 and the secondary gas injection system 9. The pump system 8 further comprises a first shut off valve 12 arranged in a supply line between the fluidizing gas sources 6 and 7 and the fluidizing bottom 3. Additionally, the pump system 8 comprises a second shut off valve 13 arranged in a line connecting the ejector 11 with the fluidizing bottom 3, even if the first shut off valve 12 is closed.

The first and second shut off valves 12 and 13 are connected to a control unit 14 which might also be connected to the first and second fluidizing gas sources 6 and 7.

During normal operation, the first shut off valve 12 is opened and the second shut off valve 13 is closed so that the fluidizing gases are provided from the first and second fluidizing gas sources 6 and 7 to the fluidizing bottom. Additionally, the secondary gas is provided from the secondary gas source 10 to the secondary gas injection system 9 through the ejector 11.

If a failure of the provision of the first fluidizing gas source 6 is detected, the first shut off valve 12 is closed and the second shut off valve 13 is opened. In this configuration, the ejector 11 withdraws the remaining fluidizing gases from the fluidizing bottom 3, so that the withdrawn remaining fluidizing gases are provided to the reaction chamber 2 together with the secondary gases provided by the secondary gas source 10.

### Reference Signs

- 1: Fluidized bed reactor
- 2: Reaction chamber
- 3: Fluidizing bottom
- 4: Reactant supply
- 5: Reactant source
- 6: First fluidizing gas source
- 7: Second fluidizing gas source
- 8: Pump system
- 9: Secondary gas injection system
- 10: Secondary gas source
- 11: Ejector
- 12: First shut off valve
- 13: Second shut off valve
- 14: Control Unit

## Claims

1. Method for operating a fluidized bed reactor (1), comprising the following steps:
- Providing at least one reactant to a reaction chamber (2) of the fluidized bed reactor (1),
- Providing a first fluidizing gas and a second fluidizing gas as fluidizing agent through a fluidizing bottom (3) at a bottom of the reaction chamber, thereby fluidizing the reactant, wherein a reaction of the fluidizing agent with the reactant occurs,
**characterized in that**
at least part of the fluidizing agent is withdrawn from the fluidizing bottom (3), when a failure of providing the first fluidizing gas is detected.

2. Method according to claim 1, wherein a secondary reaction gas is provided to the reaction chamber (2) through an injection system (9) above the fluidizing bottom (3), wherein the withdrawn fluidizing gas is supplied into the reaction chamber (2) through the injection system (9).

3. Method according to claim 1 or 2, wherein the second fluidizing gas is withdrawn, when the failure of providing the first fluidizing gas is detected.

4. Method according to one of the preceding claims, wherein the reactant is a solid fuel, such as coal or biomass, and/or a liquid fuel, such as oil.

5. Method according to one of the preceding claims, wherein the first fluidizing gas comprises a gaseous oxygen comprising gas and the second fluidizing gas comprises ammonia.

6. Method according to claim 5, wherein 2 Vol. % to 30 Vol. % of the fluidizing gas is ammonia.

7. Method according to claims 4 and 5, wherein the mass ratio of ammonia to the reactant is between 0,05 and 0,5.

8. Fluidized bed apparatus, comprising
• a fluidized bed reactor (1), the fluidized bed reactor (1) having
- a reaction chamber (2),
- a fluidizing bottom (3) at the bottom of the reaction chamber (2),
- at least one reactant supply (4) above the fluidizing bottom (3),
• at least one source (5) for a reactant being connected to the reactant supply (4),
• a first fluidizing gas source (6) being connected to the fluidizing bottom (3),
• a second fluidizing gas source (7) being connected to the fluidizing bottom (3),
**characterized in that**
the fluidized bed apparatus comprises a pump system (8) connected to the fluidizing bottom (3) for withdrawing fluidizing gas from the fluidizing bottom (3).

9. Fluidized bed apparatus according to claim 8, comprising
- at least one secondary gas injection system (9) above the fluidizing bottom (3),
- a secondary gas source (10) being connected to the secondary gas injection system (9), wherein
the pump system (8) is connected to the secondary gas injection system (9) so that the withdrawn fluidizing gas is provided to the reaction chamber (2).

10. Fluidized bed apparatus according to claim 8 or 9, wherein the pump system (8) comprises an ejector (11).

11. Fluidized bed apparatus according to claim 10, wherein the ejector (11) is arranged in a supply line between the secondary gas source (10) and the secondary gas injection (9), wherein the ejector is connected to a supply line between a fluidizing gas source (6, 7) and the fluidizing bottom (2).

12. Fluidized bed apparatus according to claim 11, wherein a shut off valve (12) is arranged in the supply line between a fluidizing gas source (6, 7) and the fluidizing bottom (2) and wherein the ejector (11) is connected to the supply line downstream of the shut off valve (12).

13. Fluidized bed apparatus according to one of claims 8 to 12, comprising a control unit (14) connected to at least the pump system (8), wherein the control unit (14) is embodied to activate the pump system (8), when failure of the first fluidizing gas source (6) is detected.
